# FASCICULE DE BREVET EUROPEEN

(11) **EP 2 729 328 B1**
(45) Date de publication et mention de la délivrance du brevet: **19.10.2016**
(21) Numéro de dépôt: 12743490.0
(22) Date de dépôt: 02.07.2012
(51) Int. Cl.: B60Q 1/48, B60R 1/00, B62D 15/02, G06T 5/00, B60Q 9/00

(54) **DISPOSITIF D'AIDE POUR METTRE À LA DISPOSITION D'UN CONDUCTEUR, DE FAÇON ANTICIPÉE, UNE IMAGE DE SYNTHÈSE REPRÉSENTATIVE D'UNE ZONE CHOISIE ENTOURANT SON VÉHICULE**
FAHRHILFEVORRICHTUNG ZUR BEREITSTELLUNG FÜR EINEN FAHRER UNTER NUTZUNG SYNTHETISCHER BILDER ZUR DARSTELLUNG EINER AUSGEWÄHLTEN FAHRZEUGUMGEBUNG
DRIVER AID DEVICE FOR MAKING AVAILABLE TO A DRIVER, IN ANTICIPATION, A SYNTHETIC IMAGE REPRESENTATIVE OF A CHOSEN ZONE AROUND HIS VEHICLE

(30) Priorité: 08.07.2011 FR 1156229
(43) Date de publication de la demande: 14.05.2014
(73) Titulaire: PEUGEOT CITROËN AUTOMOBILES SA, 78140 Vélizy Villacoublay (FR)
(72) Inventeur: LARGE, Frederic, F-78180 Montigny Le Bretonneux (FR)
(74) Mandataire: Jeannin, Laurent Jean-Pierre
(86) Numéro de dépôt international: PCT/FR2012/051534
(87) Numéro de publication internationale: WO 2013/007915

(56) Documents cités:
- EP-A1- 2 257 066
- FR-A1- 2 922 029
- JP-A- 2007 110 572
- US-A1- 2003 108 222
- US-A1- 2006 271 278
- US-A1- 2007 279 493

## Description

L'invention concerne les véhicules, éventuellement de type automobile, et plus précisément les dispositifs embarqués qui permettent d'aider au moins visuellement les conducteurs à manoeuvrer leurs véhicules, notamment pendant des phases d'approche.

On entend ici par « phase d'approche » une phase pendant laquelle on manoeuvre un véhicule à faible vitesse dans le but de le placer en un endroit choisi, par exemple pour le garer.

Certains véhicules, notamment de type automobile, sont équipés d'un dispositif destiné à aider leur conducteur à les manoeuvrer pendant les phases d'approche, par exemple en fournissant des informations utiles pour les garer.

C'est notamment le cas des dispositifs d'aide qui sont appelés « radars de recul » ou qui sont destinés à déterminer si une place de stationnement est suffisamment grande pour accueillir un véhicule (de tels dispositifs d'aide sont notamment décrits dans les documents brevet US 2009/167564 et US 2011/043380).

C'est également le cas des dispositifs d'aide qui sont destinés à fournir des images de synthèse, dans des vues du dessus, des zones de stationnement dans lesquelles sont garées des véhicules, à partir d'un historique d'images « intermédiaires ». Ce type de dispositif d'aide est chargé de recaler les unes par rapport aux autres des images successives, acquises par au moins une caméra d'un véhicule dans sa zone d'acquisition, en fonction des déplacements effectués par ce véhicule entre ces différentes images afin de constituer progressivement une image de synthèse, éventuellement complète, de la zone de stationnement du véhicule dans une vue choisie, éventuellement du dessus (il peut en effet s'agir d'une vue partielle, correspondant à une extension de la vue d'une caméra). Cela nécessite des moyens de stockage capables de mémoriser les données d'image de chaque image intermédiaire et de l'image de synthèse en cours de construction incrémentale.

Les dispositifs d'aide aux manoeuvres sont généralement activés par le conducteur ou bien de façon automatique lorsque la marche arrière est enclenchée et/ou lorsque la vitesse du véhicule devient inférieure à un seuil prédéfini. Leur activation entraîne un affichage immédiat d'une vue choisie (éventuellement du dessus (ou aérienne)), directement exploitable par le conducteur, lorsqu'ils ne sont pas basés sur l'utilisation d'un historique d'images. Mais lorsque les dispositifs d'aide aux manoeuvres sont basés sur l'utilisation d'un historique d'images, ils ne peuvent offrir qu'une vue très partielle de la zone qui entoure leur véhicule au moment où ils sont activés. En effet, seule chaque zone au sol qui est observée par une caméra est visible. Les autres portions de la zone complète entourant le véhicule ne pourront être fournies au conducteur qu'au fur et à mesure des déplacements du véhicule pendant la manoeuvre. Dans l'attente de la construction de l'image de synthèse de la zone complète, il existe donc des zones aveugles pour lesquelles le conducteur ne dispose pas d'information, ce qui peut s'avérer gênant, voire potentiellement risqué.

Afin d'éviter l'inconvénient précité, les dispositifs d'aide à historique d'images pourraient effectuer leurs calculs en permanence. Mais cela induit au moins deux inconvénients. En effet, cela entraîne non seulement une consommation électrique permanente, mais également des flux de données plus importants dans les réseaux de bord des véhicules. De plus, lorsque les moyens de traitement du dispositif d'aide sont installés dans un calculateur du véhicule qui est également en charge d'autres fonctions, leur utilisation permanente peut monopoliser inutilement des ressources de mémoire et de calcul de ce calculateur qui pourraient être utiles, voire nécessaires, à une ou plusieurs autres fonctions qu'il gère.

On connait par le document US2006/0271278, considéré ici comme le document de l'art antérieur le plus proche selon le préambule de la revendication 1, un système d'aide au parking permettant d'identifier la position d'un véhicule et d'obtenir des d'image d'une zone autour du véhicule à partir d'une caméra sur le véhicule.

L'invention a donc pour but d'améliorer la situation pour les dispositifs d'aide à historique d'images.

Elle propose notamment à cet effet un dispositif, destiné à aider un conducteur de véhicule, et comprenant des moyens de traitement agencés:
- en présence d'au moins une information primaire qui signale une possibilité que le véhicule débute une manoeuvre, pour obtenir des groupes de données d'image représentatifs d'images intermédiaires acquises à des instants successifs dans au moins une zone d'acquisition qui entoure partiellement le véhicule et constitue une partie d'une zone choisie, et
- si une manoeuvre débute effectivement à un instant, pour mettre à disposition une représentation d'une image de synthèse dans une vue choisie de cette zone choisie à cet instant, construite à partir des groupes de données d'image obtenus et propre à être affichée sur un écran qui est présent dans le véhicule.

Lesdits moyens de traitement (MT) sont agencés pour commencer ladite obtention de groupes de données d'image en présence d'une vitesse en cours dudit véhicule (V) devenue inférieure à un premier seuil qui est lui-même supérieur à un second seuil associé à un début de manoeuvre, ledit premier seuil étant choisi de sorte que l'écart qui le sépare dudit second seuil autorise un déplacement dudit véhicule (V) au moins égal à une dimension de ladite zone choisie (ZE) suivant la direction de déplacement dudit véhicule (V).

On entend ici par « vue choisie » une vue sous un angle particulier, comme par exemple une vue du dessus ou une vue de trois-quarts avant ou arrière. Par ailleurs, on entend ici par « zone choisie » tout ou partie de la zone qui entoure complètement un véhicule.

Grâce à l'invention, le dispositif d'aide peut, par exemple, construire une image de synthèse de la zone choisie de façon anticipée dès qu'il sait que ce véhicule est susceptible de faire l'objet d'une manoeuvre dans un proche avenir. Ainsi, si une telle manoeuvre débute, le conducteur dispose immédiatement d'une image de synthèse de la zone choisie. La construction ne débutant que quelques instants avant le début d'une manoeuvre, elle n'utilise des ressources de mémoire et de calcul d'un calculateur et ne nécessite un trafic de données sur le réseau de bord que pendant ces quelques instants et non de façon permanente. Dans une variante, le dispositif d'aide peut, par exemple, construire une image de synthèse de la zone choisie dès qu'il sait que ce véhicule va effectuer une manoeuvre. Il dispose en effet des données d'image nécessaires à la construction immédiate de cette image de synthèse.

Le dispositif selon l'invention peut comporter d'autres caractéristiques qui peuvent être prises séparément ou en combinaison, et notamment :
- le premier seuil peut être choisi de sorte qu'il corresponde à une distance minimale de freinage qui est nécessaire au véhicule pour atteindre une vitesse nulle et qui est strictement supérieure à la dimension de la zone choisie suivant la direction de déplacement du véhicule ;
   - ses moyens de traitement peuvent être agencés pour construire, à partir des données d'image obtenues, une représentation de la zone choisie avec le véhicule, dans la vue choisie ;
   - ses moyens de traitement peuvent être agencés pour recaler les images intermédiaires les unes par rapport aux autres en fonction d'informations qui sont associées respectivement aux groupes de données d'image obtenues qui les représentent et qui sont représentatives des déplacements effectués par le véhicule entre ces différentes images intermédiaires, afin de constituer progressivement l'image de synthèse de la zone choisie dans la vue choisie ;
   - il peut comprendre des moyens d'acquisition propres à acquérir une partie au moins des groupes de données d'image à des instants successifs ;
      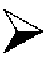 les moyens d'acquisition peuvent être choisis parmi (au moins) une caméra d'observation qui est solidarisée à une partie arrière du véhicule et une caméra d'observation qui est solidarisée à une partie avant du véhicule ;
   - ses moyens de traitement peuvent être agencés pour fournir la représentation de l'image de synthèse lorsque la vitesse en cours du véhicule est devenue inférieure à un second seuil qui est associé à un début de manoeuvre et/ou en cas de réception d'une instruction requérant l'affichage de cette représentation de l'image de synthèse sur l'écran du véhicule et fournie par le conducteur du véhicule.

L'invention propose également un véhicule, éventuellement de type automobile, et comprenant un dispositif d'aide du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement, dans une vue du dessus, un exemple de véhicule automobile équipé d'un exemple de réalisation de dispositif d'aide selon l'invention,
- les figures 2A à 2D illustrent schématiquement et respectivement quatre phases successives d'acquisition de données d'image destinées à permettre la construction progressive d'une image de synthèse, dans une vue du dessus, la première phase étant initiée par une information primaire signalant une possibilité que le véhicule débute une manoeuvre, et
- la figure 3 illustre schématiquement un écran d'affichage du véhicule de la figure 1 sur lequel se trouve affichée l'image de synthèse de la zone choisie qui entoure, ici, intégralement le véhicule à la fin de la quatrième phase illustrée sur la figure 2D.

Les dessins annexés pourront non seulement servir à compléter l'invention, mais aussi contribuer à sa définition, le cas échéant.

L'invention a pour but d'offrir un dispositif D destiné à aider au moins visuellement un conducteur à manoeuvrer son véhicule V, en particulier pendant une phase d'approche.

Dans ce qui suit, on considère, à titre d'exemple non limitatif, que le véhicule V est de type automobile. Il s'agit par exemple d'une voiture, d'un autocar, d'un camion ou d'un véhicule utilitaire. Mais, l'invention n'est pas limitée à ce type de véhicule. Elle concerne en effet tout type de véhicule terrestre ou maritime (ou fluvial) ou encore aérien (comme par exemple un drone - déclenchement anticipé de la construction d'une vue d'une zone choisie à l'approche d'une zone géographique donnée, en vue d'en prendre une photo complète) pouvant effectuer des déplacements et des manoeuvres sur le sol ou sur l'eau ou encore dans les airs.

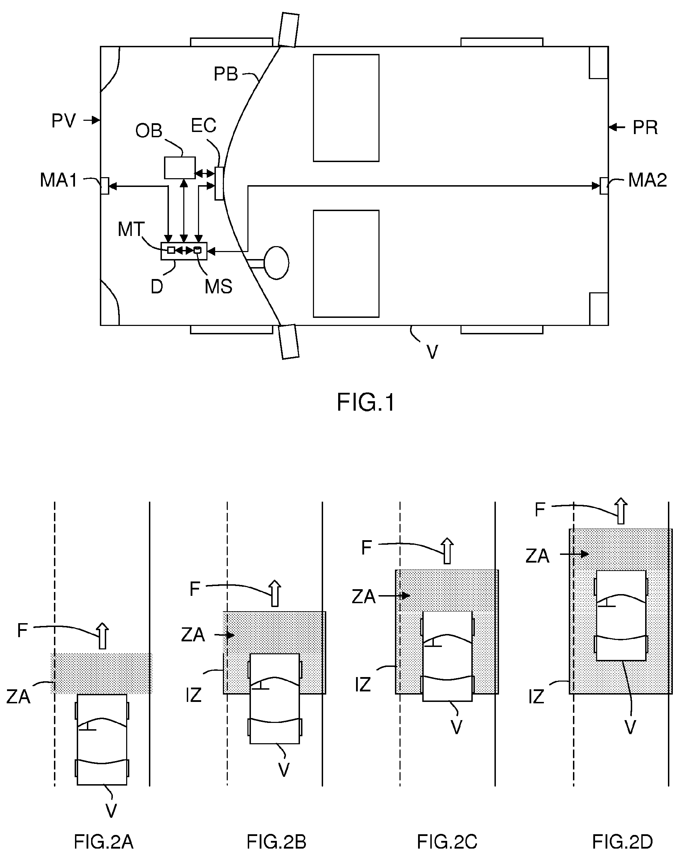

On a schématiquement et fonctionnellement représenté sur la figure 1 un véhicule automobile de type voiture V, équipé d'un exemple de réalisation d'un dispositif d'aide D selon l'invention.

Cette voiture V comprend classiquement une partie avant PV et une partie arrière PR opposée à la partie avant PV, un ordinateur de bord OB, et une planche de bord PB, ici équipée d'un écran EC (en position centrale) couplé à son ordinateur de bord OB.

Le dispositif d'aide D comprend au moins des moyens de traitement MT.

Dans l'exemple non limitatif illustré, le dispositif d'aide D est un équipement qui ne fait pas partie de l'ordinateur de bord OB du véhicule V, mais qui lui est préférentiellement couplé. Mais, il pourrait faire partie de cet ordinateur de bord OB, au moins en partie. Par conséquent, le dispositif d'aide D peut être réalisé sous la forme de circuits électroniques, ou de modules logiciels (ou informatiques), ou bien d'une combinaison de circuits électroniques et de modules logiciels.

Les moyens de traitement MT sont agencés (ou conçus) pour intervenir lorsque leur dispositif d'aide D dispose d'une information primaire qui signale la possibilité que le véhicule V débute (prochainement) une manoeuvre. Il est important de noter que cette information primaire peut être fournie au dispositif d'aide D par un autre équipement (ou élément) du véhicule V (éventuellement l'ordinateur de bord OB ou un autre calculateur (par exemple un dispositif d'aide à la navigation)), ou bien obtenue par le dispositif d'aide D (par exemple lors de comparaisons de valeurs de paramètres).

Parmi les informations primaires qui sont représentatives d'une manoeuvre pouvant être prochainement effectuée, et donc qui peuvent déclencher l'intervention des moyens de traitement MT, on peut notamment citer :
- la vitesse en cours du véhicule V lorsqu'elle est devenue inférieure à un premier seuil S1 qui est lui-même supérieur à un second seuil S2 associé à un début de manoeuvre. La vitesse du véhicule V peut, par exemple, être fournie au dispositif D de façon périodique par l'ordinateur de bord OB ou par un réseau de communication du véhicule V, et donc les moyens de traitement MT procèdent à la comparaison de chaque valeur de vitesse reçue au moins au premier seuil S1,
- une information de localisation signalant la proximité d'une zone de stationnement. Cette information de localisation peut, par exemple, être fournie par une fonction d'aide à la navigation qui est installée, au moins temporairement, dans le véhicule V et qui contient (ou peut accéder à) une base de données d'informations publiques (c'est par exemple le cas d'un équipement d'aide à la navigation (ou navigateur) ou d'un téléphone mobile disposant d'une fonction de géolocalisation),
- une information de localisation signalant le fait que le véhicule V arrive à proximité d'une destination qui a été programmée par le conducteur dans une fonction d'aide à la navigation installée, au moins temporairement, dans le véhicule V,
- une information d'utilisation de clignotants du véhicule V. Cette information peut, par exemple, être fournie au dispositif D par l'ordinateur de bord OB ou par un réseau de communication du véhicule V,
- une information d'utilisation de la pédale de frein du véhicule V. Cette information peut, par exemple, être fournie au dispositif D par l'ordinateur de bord OB ou par un réseau de communication du véhicule V, et
- une information d'angle de braquage du véhicule V. Cette information peut, par exemple, être fournie au dispositif D par l'ordinateur de bord OB ou par un réseau de communication du véhicule V,
- une information provenant d'une fonction d'aide au stationnement. Cette information peut résulter, par exemple, d'une activation par le conducteur d'une fonction de recherche de place de parking, ou d'une activation automatique (par exemple en cas de détection et de reconnaissance dans une zone choisie ZE d'éléments, tels que des marquages au sol, indiquant une zone potentielle de stationnement).

Lorsque les moyens de traitement MT sont agencés de manière à utiliser une information primaire qui est représentative d'une vitesse en cours devenue inférieure au premier seuil S1, ce dernier (S1) peut être choisi de sorte que l'écart qui le sépare du second seuil S2 autorise un déplacement d_{V} du véhicule V qui est au moins égal à la dimension d_{Z} d'une zone choisie ZE suivant la direction de déplacement du véhicule V (soit d_{V} ≥ d_{Z}).

On entend ici par « zone choisie » tout ou partie d'une zone qui entoure complètement un véhicule.

A titre d'exemple non limitatif, le premier seuil S1 peut être choisi de sorte qu'il corresponde à une distance minimale de freinage dₘᵢₙ, nécessaire au véhicule V pour atteindre une vitesse nulle, qui est strictement supérieure à la dimension d_{Z} de la zone choisie ZE (qui est connue à l'avance), soit dₘᵢₙ > d_{Z}. Dans ce cas, le premier seuil S1 présente une valeur variable en fonction du véhicule V et plus précisément en fonction de sa capacité de freinage.

Chaque fois que les moyens de traitement MT disposent d'au moins une information primaire du type précité, ils commencent à obtenir à un instant t0 des groupes de données d'image, représentatifs d'images intermédiaires acquises à des instants successifs dans au moins une zone d'acquisition ZA (voir figure 2A) entourant partiellement le véhicule V et qui constitue une partie d'une zone choisie ZE.

Les groupes de données d'image sont fournis par des moyens d'acquisition MAi qui sont installés dans le véhicule V en au moins un endroit approprié.

De préférence, ces moyens d'acquisition MAi comprennent au moins une caméra d'observation qui est solidarisée au véhicule V dans une position qui lui permet d'observer une partie au moins de son environnement immédiat, et en particulier une zone d'acquisition ZA qui est située derrière son pare-choc arrière ou devant son pare-choc avant (comme dans l'exemple illustré sur les figures 2A à 2D). Chaque caméra (d'observation) MAi fournit des images réelles.

Dans l'exemple non limitatif illustré sur la figure 1, les moyens d'acquisition MAi comprennent deux caméras d'observation MA1 (i = 1) et MA2 (i = 2) implantées en position centrale respectivement à l'avant et à l'arrière du véhicule V (par exemple dans les pare-chocs ou boucliers).

On notera que les moyens d'acquisition MAi peuvent également et éventuellement comprendre des moyens d'analyse par voie d'ondes, comme par exemple des détecteurs radar, implantés à l'avant et/ou à l'arrière du véhicule V (par exemple dans les pare-chocs ou boucliers) dans des positions qui leur permettent de détecter des obstacles dans leur environnement immédiat. Il est rappelé que les moyens d'analyse par voie d'ondes fournissent des données d'inspection à partir desquelles on peut générer une cartographie 2D, 2,5D ou 3D de l'environnement immédiat extérieur au véhicule V.

Il est également important de noter que l'un au moins des moyens d'acquisition MAi peut faire éventuellement partie du dispositif d'aide D. Par conséquent, l'un au moins des moyens d'acquisition MAi peut être éventuellement un équipement qui assure au moins une autre fonction au sein du véhicule V. Dans ce dernier cas, les données acquises par l'équipement doivent être récupérées soit auprès de ce dernier, soit sur le bus informatique du véhicule V, soit auprès de l'ordinateur de bord du véhicule V.

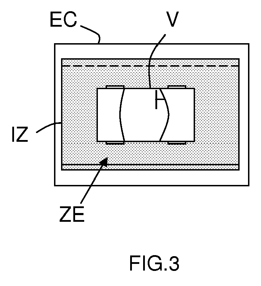

Les moyens de traitement MT sont également chargés, lorsqu'une manoeuvre débute effectivement (ou va débuter) à un certain instant t1 postérieur à l'instant t0 où ils ont commencé à obtenir des groupes de données d'image (et donc corrélé à cet instant t0), de mettre à disposition une représentation d'une image de synthèse IZ, dans une vue choisie, d'une zone choisie ZE qui entoure au moins partiellement le véhicule V à cet instant t1 (voir figure 3), construite à partir des groupes de données d'image obtenus et propre à être affichée sur un écran EC présent dans le véhicule V.

On entend ici par « vue choisie » une vue sous un angle particulier, comme par exemple une vue du dessus ou une vue de trois-quarts avant ou arrière.

Cet écran EC est par exemple celui qui est installé dans la planche de bord PB du véhicule V. Mais cela n'est pas obligatoire. Il pourrait en effet s'agir d'un écran qui fait partie du dispositif d'aide D, notamment lorsque ce dernier (D) se présente sous la forme d'un boîtier portatif.

On notera que l'image de synthèse IZ de la zone choisie ZE inclut préférentiellement une représentation schématique du véhicule V (au moins partielle).

De préférence, les moyens de traitement MT sont agencés pour commencer à construire l'image de synthèse IZ de la zone choisie ZE dès qu'ils reçoivent après un instant t0 au moins un premier groupe de données d'image, représentatif d'une image intermédiaire acquise dans au moins une zone d'acquisition ZA par des moyens d'acquisitions MAi. Dans ce cas, si une manoeuvre débute à l'instant t1, le conducteur dispose immédiatement d'une image de synthèse IZ de la zone choisie ZE qui entoure partiellement ou intégralement son véhicule.

Afin de construire progressivement l'image de synthèse IZ de la zone choisie ZE les moyens de traitement MT peuvent, par exemple, mettre en oeuvre une technique dite « à historique d'images » du type de celle qui est décrite dans le document brevet FR 09 53271, dont le contenu technique est ici incorporé par référence. Cette technique est très schématiquement illustrée sur les figures 2A à 2D. Elle consiste, de façon simplifiée, à recaler les images intermédiaires (représentées par les groupes de données d'image obtenus) les unes par rapport aux autres en fonction d'informations, qui sont associées respectivement à ces groupes de données d'image et représentatives de déplacements effectués par le véhicule V entre ces différentes images intermédiaires, afin de constituer progressivement l'image de synthèse IZ de la zone choisie ZE dans une vue choisie (illustrée sur la figure 3 (ici une vue du dessus)).

Il est important de noter qu'il est avantageux, pour une question de taille de mémoire, de ne stocker temporairement, jusqu'à la réception du prochain groupe de données d'image, que l'image de synthèse IZ qui est en cours de construction, dans la vue choisie, puis de recaler le prochain groupe de données fourni par les moyens d'acquisition MAi par rapport aux données stockées de l'image de synthèse IZ en cours de construction.

Ce stockage se fait dans des moyens de stockage MS, comme par exemple une mémoire. On notera que dans l'exemple non limitatif illustré sur la figure 1 les moyens de stockage MS font partie du dispositif d'aide D. Mais cela n'est pas obligatoire. Ils pourraient en effet faire partie d'un autre dispositif, équipement ou élément du véhicule V, couplé au dispositif d'aide D ou au moins à ses moyens de traitement MT.

Dans l'exemple non limitatif illustré sur les figures 2A à 2D, on n'utilise de façon simplifiée que la caméra avant MA1 du véhicule V pour constituer progressivement l'image de synthèse IZ de la zone choisie ZE (ici la zone qui entoure complètement le véhicule V) dans une vue choisie (ici une vue du dessus). Cette caméra avant MA1 acquiert périodiquement une image réelle d'une zone d'acquisition ZA située devant le véhicule V, et les données d'image définissant chaque image sont transmises aux moyens de traitement MT afin de pouvoir être recalées les unes par rapport aux autres, de préférence au fur et à mesure de leur acquisition.

La figure 2A illustre schématiquement la première phase d'acquisition d'un premier groupe de données d'image destiné à contribuer à la construction progressive de l'image de synthèse IZ, dans une vue choisie (ici une vue du dessus). On comprendra que cette première phase d'acquisition est initiée après l'instant t0 par une information primaire qui signale une possibilité que le véhicule V débute une manoeuvre.

La figure 2B illustre schématiquement une deuxième phase d'acquisition d'un deuxième groupe de données d'image destiné à contribuer à la construction progressive de l'image de synthèse IZ, dans une vue choisie (ici une vue du dessus). On comprendra que cette deuxième phase d'acquisition est initiée après que le véhicule V se soit déplacé (flèche F) sur une première distance par rapport à la position qu'il possédait sensiblement à l'instant t0 (matérialisée sur la figure 2A). On remarquera sur cette figure 2B que le rectangle référencé IZ matérialise l'image de synthèse à un stade intermédiaire, obtenue par recalage des premier et deuxième groupes de données d'image.

La figure 2C illustre schématiquement une troisième phase d'acquisition d'un troisième groupe de données d'image destiné à contribuer à la construction progressive de l'image de synthèse IZ, dans une vue choisie (ici une vue du dessus). On comprendra que cette troisième phase d'acquisition est initiée après que le véhicule V se soit de nouveau déplacé (flèche F) sur une seconde distance par rapport à la position qu'il possédait lors de l'acquisition précédente (matérialisée sur la figure 2B). On remarquera sur cette figure 2C que le rectangle référencé IZ matérialise l'image de synthèse à un autre stade intermédiaire, obtenue par recalage des premier, deuxième et troisième groupes de données d'image ou bien du troisième groupe de données d'image par rapport aux données stockées de l'image de synthèse IZ en cours de construction (matérialisée sur la figure 2B).

La figure 2D illustre schématiquement une quatrième phase d'acquisition d'un quatrième groupe de données d'image destiné à contribuer à la construction progressive de l'image de synthèse IZ, dans une vue choisie (ici une vue du dessus). On comprendra que cette quatrième phase d'acquisition est initiée après que le véhicule V se soit de nouveau déplacé (flèche F) sur une troisième distance par rapport à la position qu'il possédait lors de l'acquisition précédente (matérialisée sur la figure 2C). On remarquera sur cette figure 2D que le rectangle référencé IZ matérialise l'image de synthèse finale, c'est-à-dire obtenue par recalage des premier, deuxième, troisième et quatrième groupes de données d'image ou bien du quatrième groupe de données d'image par rapport aux données stockées de l'image de synthèse IZ en cours de construction (matérialisée sur la figure 2C).

On notera que dans une variante de réalisation, les moyens de traitement MT peuvent contrôler le stockage de groupes de données d'image successifs entre les instants t0 et t1, et construire l'image de synthèse IZ de la zone choisie ZE à partir de tous ces groupes stockés dès que l'instant t1 survient. Pour ce faire, ils peuvent mettre en oeuvre la même technique que celle décrite ci-avant, mais en enchaînant les recalages très rapidement. Mais ils peuvent également utiliser toute autre technique de recalage connue de l'homme de l'art, et notamment la technique dite de « génération de mosaïque » (ou en anglais « mosaicing ») et la technique dite de « structure à partir du mouvement » (ou en anglais « structure from motion »), qui sont connues en robotique mobile notamment. Les calculs de recalage pouvant être effectués très rapidement, le conducteur dispose donc très rapidement d'une image de synthèse IZ de la zone choisie ZE.

Une fois que les moyens de traitement MT ont construit cette image de synthèse finale IZ, ils la mettent à disposition en vue de son éventuel affichage sur l'écran EC.

On notera que si cette image de synthèse finale IZ est immédiatement affichée, les moyens de traitement MT continuent de la mettre à jour lors de chaque nouvelle acquisition d'un groupe de données d'image par les moyens d'acquisition MAi afin qu'elle puisse être affichée sur l'écran EC en tant que mise à jour de l'image de synthèse (complète) IZ précédente. Si cette image de synthèse finale IZ n'est pas immédiatement affichée, les moyens de traitement MT continuent également de la mettre à jour lors de chaque nouvelle acquisition d'un groupe de données d'image par les moyens d'acquisition MAi afin qu'elle soit effectivement représentative de la totalité de la zone choisie ZE entourant au moins partiellement le véhicule V au moment où il sera décidé de l'afficher.

On notera également que les moyens de traitement MT peuvent être agencés pour fournir la représentation de l'image de synthèse (complète) IZ, en vue de son affichage sur l'écran EC, lorsque la vitesse en cours du véhicule V est devenue inférieure au second seuil S2 (qui est associé à un début de manoeuvre) et/ou en cas de réception d'une instruction requérant l'affichage immédiat de cette représentation de l'image de synthèse IZ sur l'écran EC du véhicule V et fournie par le conducteur, selon le mode de réalisation choisi.

Tout type d'interface homme/machine (ou IHM) connu de l'homme de l'art peut être ici utilisé pour permettre au conducteur de signaler au dispositif d'aide D qu'il requiert l'affichage d'une image de synthèse (complète) IZ sur l'écran EC. Cette interface homme/machine (ou IHM) peut faire partie du dispositif d'aide D ou d'un autre équipement du véhicule V. Ainsi, l'interface homme/machine (ou IHM) peut se présenter sous la forme de moyens de saisie tactile définis sur un écran tactile (éventuellement EC), ou d'un organe permettant de se déplacer dans des menus prédéfinis afin de sélectionner un sous-menu dédié à l'affichage de l'image de synthèse (complète) IZ, ou encore d'un actionneur.

L'analyse de la vitesse en cours du véhicule V peut, par exemple, être effectuée par les moyens de traitement MT. Dans ce cas, ils effectuent périodiquement la comparaison de chaque valeur de vitesse reçue (par exemple de l'ordinateur de bord OB) au second seuil S2.

Par exemple, et non limitativement, le second seuil S2 peut être compris entre 10 km/h et 20 km/h.

Il est important de noter que le dispositif d'aide D selon l'invention peut éventuellement faire partie d'un dispositif embarqué, au moins temporairement (comme par exemple un téléphone mobile), offrant une ou plusieurs autres fonctions d'aide à la conduite et/ou aux manoeuvres ou bien d'aide à la navigation ou encore d'aide au stationnement. Il peut également offrir lui-même, en complément, une ou plusieurs autres fonctions d'aide à la conduite et/ou aux manoeuvres. Parmi ces fonctions d'aide complémentaires, on peut notamment citer la détection d'objets susceptibles de constituer des obstacles, la détection de franchissements de lignes, la correction de trajectoire, l'adaptation de la vitesse du véhicule en fonction de la distance qui le sépare d'un véhicule qui le précède, la détection de place de stationnement adaptée à un véhicule, l'assistance lors d'une manoeuvre dans un passage délicat, ou l'assistance pendant une manoeuvre de stationnement.

L'invention ne se limite pas aux modes de réalisation de dispositif d'aide et de véhicule décrits ci-avant, seulement à titre d'exemple, mais elle englobe toutes les variantes que pourra envisager l'homme de l'art dans le cadre des revendications ci-après.

## Revendications

1. Dispositif d'aide (D) pour un conducteur d'un véhicule (V), comprenant des moyens de traitement (MT) agencés, en présence d'au moins une information primaire signalant une possibilité que ledit véhicule (V) débute une manoeuvre, pour obtenir des groupes de données d'image représentatifs d'images intermédiaires acquises à des instants successifs dans au moins une zone d'acquisition (ZA) entourant partiellement ledit véhicule (V) et constituant une partie d'une zone choisie (ZE), et, si ladite manoeuvre débute effectivement à un instant, pour mettre à disposition une représentation d'une image de synthèse (IZ) dans une vue choisie de ladite zone choisie (ZE) audit instant, construite à partir desdits groupes de données d'image obtenus et propre à être affichée sur un écran (EC) présent dans ledit véhicule (V) **caractérisé en ce que** lesdits moyens de traitement (MT) sont agencés pour commencer ladite obtention de groupes de données d'image en présence d'une vitesse en cours dudit véhicule (V) devenue inférieure à un premier seuil qui est lui-même supérieur à un second seuil associé à un début de manoeuvre, ledit premier seuil étant choisi de sorte que l'écart qui le sépare dudit second seuil autorise un déplacement dudit véhicule (V) au moins égal à une dimension de ladite zone choisie (ZE) suivant la direction de déplacement dudit véhicule (V).

2. Dispositif selon la revendication 1, **caractérisé en ce que** ledit premier seuil est choisi de sorte qu'il corresponde à une distance minimale de freinage, nécessaire audit véhicule (V) pour atteindre une vitesse nulle, strictement supérieure à ladite dimension de la zone choisie (ZE) suivant la direction de déplacement du véhicule (V).

3. Dispositif selon l'une des revendications 1 ou 2, **caractérisé en ce que** lesdits moyens de traitement (MT) sont agencés pour recaler lesdites images intermédiaires les unes par rapport aux autres en fonction d'informations associées respectivement aux groupes de données d'image obtenus qui les représentent et représentatives de déplacements effectués par ledit véhicule (V) entre ces différentes images intermédiaires afin de constituer progressivement ladite image de synthèse (IZ) de ladite zone choisie (ZE) dans ladite vue choisie.

4. Dispositif selon l'une des revendications 1 à 3, **caractérisé en ce qu'**il comprend des moyens d'acquisition (MAi) propres à acquérir une partie au moins desdits groupes de données d'image à des instants successifs.

5. Dispositif selon la revendication 4, **caractérisé en ce que** lesdits moyens d'acquisition (MAi) sont choisis dans un groupe comprenant au moins une caméra d'observation solidarisée à une partie arrière dudit véhicule (V), et une caméra d'observation solidarisée à une partie avant dudit véhicule (V).

6. Dispositif selon l'une des revendications 1 à 5, **caractérisé en ce que** lesdits moyens de traitement (MT) sont agencés pour fournir ladite représentation de l'image de synthèse (IZ) lorsque la vitesse en cours dudit véhicule (V) est devenue inférieure à un second seuil associé à un début de manoeuvre et/ou en cas de réception d'une instruction requérant l'affichage de cette représentation de l'image de synthèse (IZ) sur ledit écran (EC) du véhicule (V) et fournie par le conducteur dudit véhicule (V).

7. Véhicule (V), **caractérisé en ce qu'**il comprend un dispositif d'aide (D) selon l'une des revendications précédentes.

8. Véhicule selon la revendication 7, **caractérisé en ce qu'**il est de type automobile.

## Patentansprüche

1. Hilfevorrichtung (D) für einen Fahrer eines Fahrzeugs (V), umfassend Verarbeitungsmittel (MT), die angeordnet sind, in Anwesenheit mindestens einer Primärinformation, die eine Möglichkeit signalisiert, dass das Fahrzeug (V) ein Fahrmanöver einleitet, um repräsentative Bilddatengruppen für Zwischenbilder zu erhalten, die in aufeinanderfolgenden Momenten in mindestens einem Aufnahmebereich (ZA), der das Fahrzeug (V) teilweise umgibt und einen Teil eines gewählten Bereichs (ZE) darstellt, zu erhalten, und wenn das Fahrmanöver tatsächlich in einem Moment beginnt, um eine Darstellung eines Übersichtsbilds (IZ) in einer gewählten Ansicht des gewählten Bereichs (ZE) dieses Moments bereitzustellen, die anhand der erhaltenen Bilddatengruppen aufgebaut und geeignet sind, um auf einem Bildschirm (EC), der im Fahrzeug (V) vorhanden ist, angezeigt zu werden, **dadurch gekennzeichnet, dass** die Verarbeitungsmittel (MT) angeordnet sind, um das Erhalten von Bilddatengruppen in Anwesenheit einer laufenden Geschwindigkeit des Fahrzeugs (V), die niedriger als ein erster Schwellenwert geworden ist, der wiederum höher als ein zweiter Schwellenwert ist, der mit einem Fahrmanöverbeginn verknüpft ist, wobei der erste Schwellenwert so gewählt wird, dass der Abstand, der ihn vom zweiten Schwellenwert trennt, eine Bewegung des Fahrzeugs (V) um mindestens eine Dimension des gewählten Bereichs (ZE) folgend der Bewegungsrichtung des Fahrzeugs (V) erlaubt.

2. Vorrichtung nach Anspruch 1, **dadurch gekennzeichnet, dass** der erste Schwellenwert so gewählt wird, dass er einem Mindestbremsweg entspricht, den das Fahrzeug (V) benötigt, um eine Geschwindigkeit null zu erreichen, im Wesentlichen größer als die Dimension des gewählten Bereichs (ZE) folgend der Bewegungsrichtung des Fahrzeugs (V).

3. Vorrichtung nach einem der Ansprüche 1 oder 2, **dadurch gekennzeichnet, dass** die Verarbeitungsmittel (MT) angeordnet sind, um die Zwischenbilder zueinander in Abhängigkeit von Informationen jeweils in Verbindung mit den erhaltenen Bilddatengruppen, die sie darstellen und repräsentativ für die durchgeführten Bewegungen durch das Fahrzeug (V) zwischen diesen verschiedenen Zwischenbildern sind, neu anzuordnen, um progressiv das Übersichtsbild (IZ) des gewählten Bereichs (ZE) in der gewählten Ansicht aufzubauen.

4. Vorrichtung nach einem der Ansprüche 1 bis 3, **dadurch gekennzeichnet, dass** sie Aufnahmemittel (MAi) umfasst, die geeignet sind, einen Teil mindestens der Bilddatengruppen in aufeinanderfolgenden Momenten aufzunehmen.

5. Vorrichtung nach Anspruch 4, **dadurch gekennzeichnet, dass** die Aufnahmemittel (MAi) ausgewählt sind in der Gruppe umfassend mindestens eine Beobachtungskamera, die an einem hinteren des Fahrzeugs (V) angebracht ist, und eine Beobachtungskamera, die an einem vorderen Abschnitt des Fahrzeugs (V) angebracht ist.

6. Vorrichtung nach einem der Ansprüche 1 bis 5, **dadurch gekennzeichnet, dass** die Verarbeitungsmittel (MT) angeordnet sind, um die Darstellung des Übersichtsbilds (IZ) zu liefern, wenn die aktuelle Geschwindigkeit des Fahrzeugs (V) niedriger als ein zweiter Schwellenwert in Verbindung mit einem Fahrmanöverbeginn geworden ist und/oder bei Empfang einer Anweisung, die die Anzeige dieser Darstellung des Übersichtsbilds (IZ) am Bildschirm (EC) des Fahrzeugs (V) anfordert und vom Fahrer des Fahrzeugs (V) gegeben wird.

7. Fahrzeug (V), **dadurch gekennzeichnet, dass** es eine Hilfevorrichtung (D) nach einem der vorherigen Ansprüche umfasst.

8. Fahrzeug nach Anspruch 7, **dadurch gekennzeichnet, dass** es vom Typ Automobil ist.

## Claims

1. Assistance device (D) for a driver of a vehicle (V), comprising processing means (MT) arranged, in the presence of at least one item of primary information indicating the possibility that said vehicle (V) is beginning a manoeuvre, to obtain groups of image data representing intermediate images acquired at successive instants in at least one acquisition zone (ZA) partially surrounding said vehicle (V) and constituting a part of a chosen zone (ZE), and, if said manoeuvre actually begins at an instant, for making available a representation of a synthesis image (IZ) in a chosen view of said chosen zone (ZE) at said instant, constructed from said groups of image data obtained and able to be displayed on a screen (EC) present in said vehicle (V), **characterised in that** said processing means (MT) are arranged so as to commence said obtaining of groups of image data in the presence of a current speed of said vehicle (V) that has become less than a first threshold, which is itself higher than a second threshold associated with a start of manoeuvre, said first threshold being chosen so that the difference that separates it from said second threshold allows a movement of said vehicle (V) at least equal to a dimension of said chosen zone (ZE) in the direction of movement of said vehicle (V).

2. Device according to claim 1, **characterised in that** said first threshold is chosen so that it corresponds to a minimum braking distance necessary for said vehicle (V) to achieve a zero speed, strictly greater than said dimension of the chosen zone (ZE) in the direction of movement of the vehicle (V).

3. Device according to one of claims 1 or 2, **characterised in that** said processing means (MT) are arranged so as to adjust said intermediate images with respect to one another according to information associated respectively with the groups of image data obtained that represent them and representing movements made by said vehicle (V) between these various intermediate images in order to gradually form said synthesis image (IZ) of said chosen zone (ZE) in said chosen view.

4. Device according to one of claims 1 to 3, **characterised in that** it comprises acquisition means (MAi) suitable for acquiring at least some of said groups of image data at successive instants.

5. Device according to claim 4, **characterised in that** said acquisition means (MAi) are chosen from a group comprising at least one observation camera secured to a rear part of said vehicle (V), and an observation camera secured to a front part of said vehicle (V).

6. Device according to one of claims 1 to 5, **characterised in that** said processing means (MT) are arranged to supply said representation of the synthesis image (IZ) when the current speed of said vehicle (V) has become less than a second threshold associated with a start of manoeuvre and/or in the case of the reception of an instruction requiring the display of this representation of the synthesis image (IZ) on said screen (EC) of the vehicle (V) and provided by the driver of said vehicle (V).

7. Vehicle (V), **characterised in that** it comprises an assistance device (D) according to one of the preceding claims.

8. Vehicle according to claim 7, **characterised in that** it is of the automobile type.
